# EUROPÄISCHE PATENTSCHRIFT

(11) **EP 1 148 254 B1**
(45) Veröffentlichungstag und Bekanntmachung des Hinweises auf die Patenterteilung: **06.05.2004**
(21) Anmeldenummer: 01107340.0
(22) Anmeldetag: 24.03.2001
(51) Int. Cl.: F16B 5/00, F16B 12/44

(54) **Stossverbindung von Rahmenteilen, insbesondere Pfosten-Riegelverbindung**
Butt joint for frame elements. especially a post and beam connection
Raccordement bout-à-bout de cadres, en particulier un raccord montant-entretoise

(30) Priorität: 19.04.2000 DE 20007221 U
(43) Veröffentlichungstag der Anmeldung: 24.10.2001
(73) Patentinhaber: Hoffmann, Thomas, 76646 Bruchsal (DE); Hoffmann, Martin, 76646 Bruchsal (DE)
(72) Erfinder: Hoffmann, Thomas, 76646 Bruchsal (DE); Hoffmann, Martin, 76646 Bruchsal (DE)
(74) Vertreter: Truckenmüller, Frank

(56) Entgegenhaltungen:
- EP-A- 0 370 334
- CH-A- 357 531
- DE-A- 3 306 661
- FR-A- 1 592 733
- FR-A- 1 599 293

## Beschreibung

Gegenstand der Erfindung ist eine Stoßverbindung von in Kontaktflächen aneinandergefügten Holzbauteilen, insbesondere von Rahmenteilen aus Massivholz, mit wenigstens einem in Bezug auf eine Mittelebene symmetrisch etwa in der Art eines schwalbenschwanzförmigen Doppelkeils ausgebildeten oder sonstige Hinterschneidungen aufweisenden Verbindungselement, das unter Überbrückung der Kontaktebene zwischen den Holzbauteilen in zu den Kontaktflächen offene und den Querschnitten der sich beidseitig der genannten Mittelebene erstreckenden Abschnitte des Verbindungselements angepaßte Nuten eingreift, die nach den gleichen Seitenkanten der Holzbauteile offen sind. Insbesondere bezieht sich die Erfindung auf eine Pfosten-Riegelverbindung etwa bei leichten Fachwerkbauten.

Aus der EP 0370334 A oder FR-A-1 338 108 ist bereits eine gattungsgemäße Stoßverbindung vorbekannt, bei der ein langgestrecktes Verbindungsmittel in sich von den Kontaktflächen aneinandergefügter Rahmenteile aus in letztere hineinerstreckenden Aufnahmenuten unter Überbrückung der Kontaktebene aufgenommen sowie in Bezug auf eine in die Kontaktebene der aneinandergefügten Rahmenteile fallende Mittelachse symmetrisch ausgebildet ist. Das Verbindungselement weist im Abstand von der genannten Mittelachse verdickte oder hammerkopfartig ausgebildete Abschnitte auf, die in entsprechend gestalteten und sich zu den Kontaktflächen der Rahmenteile hin verjüngenden Erweiterungen der Nuten eingreifen und dadurch eine formschlüssige Verbindung der Rahmenteile vermitteln.

Die vorbekannte Stoßverbindung hat sich insbesondere beim Zusammenfügen kleiner Bauteile, etwa im Möbelbau, zwar bewährt, ist aber mit dem Mangel behaftet, daß in Richtung der Längserstreckung des Verbindungselements angreifende Kräfte kaum aufgenommen werden können. Darüber hinaus kann es im Laufe der Zeit in Abhängigkeit von den Witterungsverhältnissen zu Lockerungen der Verbindungselemente kommen. Derartigen Lockerungen kann nur bedingt durch Erhöhung des Preßsitzes der Verbindungselemente in deren Aufnahmenuten begegnet werden, weil dies beim Eintreiben der Verbindungselemente leicht zum Ausreißen der Bauteilnuten führen kann.

Demgegenüber soll durch die Erfindung eine Stoßverbindung von Bauteilen, insbesondere von Rahmenteilen geschaffen werden, die in Richtung der Längserstreckung eines Verbindungselements wirkende Kräfte problemlos zu übertragen vermag. Unter Verbindung von Rahmenteilen werden vorliegend auch Pfosten-Riegelverbindungen verstanden.

Gelöst ist diese Aufgabe erfindungsgemäß dadurch, daß die Stoßverbindung nach dem Oberbegriff des Schutzanspruchs 1 durch wenigstens ein langgestrecktes zweites Verbindungsmittel gesichert ist, das ebenfalls unter Überbrückung der Kontaktebene zwischen den Holzbauteilen in Abschnitten von diesen aufgenommen ist und gleichzeitig das erste Verbindungselement quer durchdringt.

Bei der Stoßverbindung nach der Erfindung ist somit das eine formschlüssige Verbindung aneinandergefügter Rahmenteile oder sonstiger Holzbauteile vermittelnde erste Verbindungselement seinerseits durch ein zweites Verbindungsmittel, welches das erste Verbindungselement durchdringt, in seiner Lage formschlüssig festgelegt. Lockerungen des ersten Verbindungselements, und damit Lockerungen der Stoßverbindung, sind somit ausgeschlossen.

Darüber hinaus genügt die erfindungsgemäße Stoßverbindung auch statischen Erfordernissen, indem in Richtung der Längserstreckung des Verbindungselements zwischen den aneinandergefügten Holzbauteilen wirkende Kräfte aufnehmbar sind. Damit ist die neuartige Stoßverbindung Verwendungen zugänglich, die vorbekannten Stoßverbindungen der vorstehend erläuterten Art verschlossen waren. Genannt seien hier nur als Pfosten-Riegelkonstruktionen ausgeführte Bauwerke, wie etwa verglaste Wintergartenvorbauten, bei denen auf den Gefachausfüllungen lastender Winddruck von an den Pfosten angeschlossenen Quer- oder Nebenträgern, sogenannten Riegeln, auf die Pfosten übertragen werden muß.

Zweckmäßigerweise durchdringt bei der erfindungsgemäßen Stoßverbindung das zweite Verbindungsmittel schräg zur Kontaktebene zwischen den aneinandergefügten Rahmenteilen verlaufend das erste Verbindungselement und erstreckt sich unter Einschluß eines spitzen Winkels von vorzugsweise 45 Grad gegenüber der Kontaktebene in die Rahmenteile hinein und durch das erste Verbindungselement hindurch.

Bei dem zweiten Verbindungsmittel kann es sich um ein in Schrägbohrungen, die sich in Abschnitten der Rahmenteile, die der Kontaktebene benachbart sind, und durch das erste Verbindungselement hindurcherstrecken, aufgenommenen Zapfen handeln, der durch geeignete Mittel in seiner Montagelage gesichert ist. Insbesondere kann der das zweite Verbindungsmittel bildende Zapfen mit Preßsitz in zumindest einer der sich in den Rahmenteilen erstreckenden Schrägbohrungen aufgenommen sein.

Gemäß einer anderen Weiterbildung der Erfindung kann als zweites Verbindungsmittel aber auch ein eingeschlagener Schrägnagel dienen, der beispielsweise unter einem Winkel von 45 Grad zu der Kontaktebene in das eine Holzbauteil eingeschlagen ist und unter Überbrückung der Kontaktebene bei Durchdringung des ersten Verbindungselements bis in das zweite Holzbauteil hineinragt.

Insbesondere die Verwendung von Schraubnägeln als zweites Verbindungselement hat sich als besonders vorteilhaft erwiesen, weil derartige Schraubnägel weitaus größeren Ausziehkräften als herkömmliche Nägel mit glatten Schäften standhalten.

Anstelle eines in Schrägbohrung aufgenommenen Zapfens oder eines eingeschlagenen Schrägnagels kann es sich, gemäß einer abermaligen Weiterbildung der Erfindung, bei dem zweiten Verbindungsmittel auch um eine schräg zur Kontaktebene zwischen den aneinandergefügten Holzbauteilen in diese unter Durchdringung des ersten Verbindungselements eingedrehte Sicherungsschraube handeln.

Eine unter Verwendung einer derartigen Sicherungsschraube hergestellte Stoßverbindung genügt besonders hohen statischen Anforderungen.

Bei der Verwendung einer derartigen Sicherungsschraube als zweites Verbindungsmittel hat es sich auch als vorteilhaft erwiesen, wenn die Sicherungsschraube einen mit selbstschneidendem Gewinde ausgestatteten Gewindeabschnitt aufweist. An diesen Gewindeabschnitt mit selbstschneidendem Gewinde kann sich ein gewindefreier Schaftabschnitt anschließen, der im eingeschraubten Zustand der Sicherungsschraube das erste Befestigungselement quer durchdringt und dadurch in seiner Lage sichert.

Gemäß einem bevorzugten Ausführungsbeispiel sind wenigstens zwei langgestreckte zweite Verbindungsmittel vorgesehen, die in einem Winkel von vorzugsweise etwa 90° zueinander angeordnet sind. Dadurch wird eine Stoßverbindung geschaffen, die noch höheren statischen Anforderungen genügt. Eine derartige Stoßverbindung kann nicht nur vorteilhaft mit Kräften senkrecht zur Achse des vorzugsweise als Nebenträger bzw. Riegel gestalteten Holzbauteils, also mit Querkräften belastet werden, sondern kann auch mit Kräften in Richtung der Achse dieses Holzbauteils, also insbesondere mit Zugkräften belastet werden, ohne daß es über der Zeit zu Lockerungen der Verbindungselemente kommen würde. Ferner muß dann beim Einbau der Holzbauteile nicht mehr auf die genaue Lage dieser Teile geachtet werden.

Dabei ist es zweckmäßig, wenn wenigstens zwei der langgestreckten zweiten Verbindungsmittel derart angeordnet sind, daß ihre Längsachsen im wesentlichen in einer gemeinsamen Ebene liegen.

Es ist ferner vorteilhaft, wenn wenigstens zwei der zweiten Verbindungsmittel symmetrisch, vorzugsweise zu einer Längsachse des ersten Verbindungselements angeordnet sind und/oder wenn wenigstens zwei der zweiten Verbindungsmittel symmetrisch zu der Kontaktebene und/oder deren Normale angeordnet sind.

Durch die vorstehenden Maßnahmen können die wirksamen Kräfte unabhängig von der Einbaulage der verbundenen Holzbauteile besonders günstig in das jeweils benachbarte Holzbauteil übergeleitet werden, wobei auch eventuelle Querkräfte, also Kräfte senkrecht zur Längserstreckung des Verbindungselements, in beide Richtungen sicher aufgefangen werden.

Vorstehende Maßnahmen tragen sowohl einzeln als auch in Kombination untereinander zu einer Stoßverbindung von Bauteilen, insbesondere von Rahmenteilen bei, die in Richtung der Längserstreckung eines Verbindungselements wirkende Kräfte problemlos zu übertragen vermag.

Weitere Vorteile, Merkmale und Gesichtspunkte der Erfindung sind dem nachfolgenden Beschreibungsteil entnehmbar, in dem bevorzugte Ausführungsbeispiele der Erfindung anhand der Figuren näher erläutert sind.
Es zeigen:
- Fig. 1: einen Querschnitt der erfindungsgemäßen Stoßverbindung mit einem das Verbindungselement quer durchdringenden zweiten Verbindungsmittel gemäß einem ersten Ausführungsbeispiel der Erfindung;
- Fig. 2: einen Querschnitt durch eine Stoßverbindung mit zwei, das Verbindungselement quer durchdringenden und gekreuzt zueinander angeordneten zweiten Verbindungsmittel gemäß einem zweiten alternativen Ausführungsbeispiel der Erfindung.

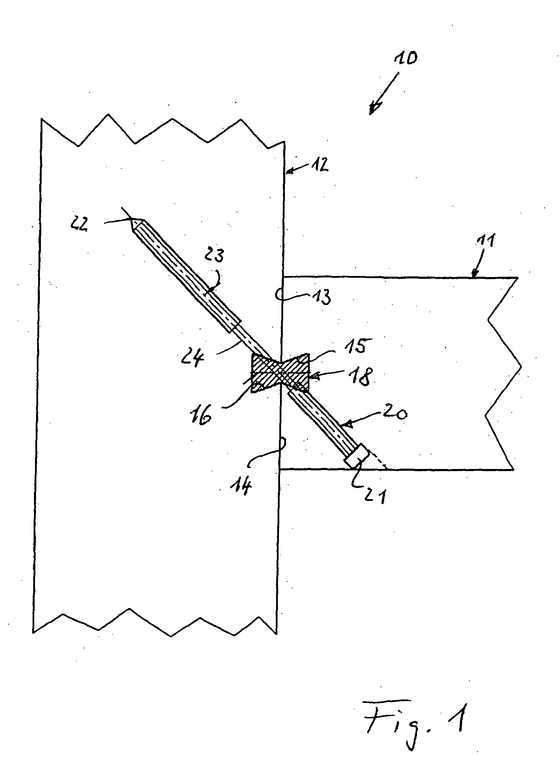

Bei der in Fig. 1 veranschaulichten Stoßverbindung 10 handelt es sich um die Verbindung eines horizontal verlaufenden Riegels 11 als Nebenträger mit einem vertikal verlaufenden Pfosten 12 als Hauptträger. Der Riegel 11 und der Pfosten 12 haben rechteckige oder quadratische Querschnitte. Der Riegel 11 ist mit einem Stirnende, also stumpf, an den Pfosten 12 angefügt. Von den in einer Kontaktebene aneinanderstoßenden Kontaktflächen 13, 14 der beiden Bauteile erstrecken sich in diese miteinander korrespondierende Aufnahmenuten 15, 16 hinein, die horizontal verlaufen und schwalbenschwanzförmig ausgebildet sind. In den Aufnahmenuten 15, 16 ist unter Überbrückung der Kontaktebene zwischen dem Riegel 11 und dem Pfosten 12 ein der Nutenform angepaßtes doppelkeilförmiges Verbindungselement aufgenommen, das langgestreckt ausgebildet ist und eine formschlüssig feste Verbindung der genannten Bauteile 11, 12 vermittelt.

Die Aufnahmenuten 15, 16 können über die gesamte Tiefe des Riegels 11 und Pfostens 12 durchgehend ausgebildet sein, oder auch von gleichen Seitenkanten der Holzbauteile 11, 12 sich in diese sacklochartig hineinerstrecken. Bei durchgehender Ausbildung der Aufnahmenuten 15, 16 sind im aneinandergefügten Zustand die in den Aufnahmenuten aufgenommenen Verbindungselemente auf beiden Seiten der Pfosten-Riegelverbindung sichtbar, hingegen bei sacklochartiger Ausbildung nur von einer Seite aus.

Das als schwalbenschwanzförmiger Doppelkeil ausgebildete erste Verbindungselement 18 ist in seiner den Riegel 11 und den Pfosten 12 miteinander verbindenden Montagelage durch ein zweites Verbindungsmittel gesichert. Bei dem zweiten Verbindungsmittel handelt es sich um eine Sicherungsschraube 20 mit einem sich von einem Schraubenkopf 21 forterstreckenden Schaft, der angrenzend an die Schaftspitze 22 einen Gewindeabschnitt 23 mit selbstschneidendem Gewinde besitzt. An den Gewindeabschnitt 23 schließt sich auf der zum Schraubenkopf 21 hinweisenden Seite ein gewindeloser Schaftabschnitt 24 an.

Die Sicherungsschraube 20 ist von der Unterseite des Riegels 11 aus unter etwa 45 Grad gegenüber dem horizontalen Verlauf des Riegels in diesen so eingedreht, daß der Schraubenschaft das doppelkeilförmige Verbindungselement 18 quer durchdringt und dadurch in seiner bestimmungsgemäßen Montagelage sichert. Dadurch ist eine statischen Erfordernissen genügende Stoßverbindung von Rahmenteilen oder sonstigen Holzbauteilen geschaffen worden, die einfach und schnell beispielsweise den Aufbau von Wintergärten oder ähnlichen Bauwerken ermöglicht.

Der Riegel 11 und der Pfosten 12 bestehen vorzugsweise aus Brettschichtholz, Vollholz (Nadelholz), Duo- und Trio-Balken oder Furnierschichtholz. Die auch als zweites Verbindungsmittel 20 bezeichnete Sicherungsschraube ist unter einem Winkel von 45° zur Faserrichtung des auch als Nebenträger dienenden Riegels 11 und des auch als Hauptträger oder Stütze dienenden Pfostens 12 angeordnet.

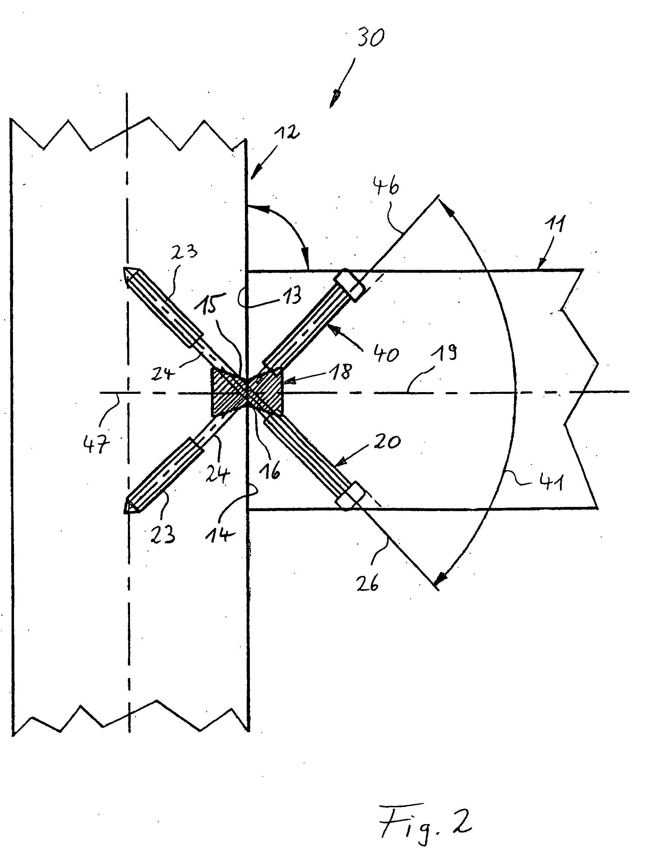

In Fig. 2 ist ein alternatives Ausführungsbeispiel einer Stoßverbindung 30 gezeigt. Dabei sind gegenüber dem in Fig. 1 gezeigten Ausführungsbeispiel gleiche Elemente mit gleichen Bezugszeichen versehen.

Der als Nebenträger und Holzbauteil gestaltete horizontale Riegel 11 und der als Hauptträger und Holzbauteil gestaltete vertikale Pfosten 12 sind mit einem Doppelkeil bzw. schwalbenschwanzförmigen ersten Verbindungselement 18 verbunden, das nunmehr mit zwei, sich im Bereich der Kontaktebene und auf der Längsachse 19 des Verbindungselements 18 in einem Winkel 41 von 90° kreuzenden zweiten Verbindungsmitteln 20, 40, in Form von Sicherungsschrauben gesichert ist.

Dabei sind die beiden zweiten Verbindungsmittel 20, 40 symmetrisch zur Längsachse 19 des ersten Verbindungselements 18 und symmetrisch zu der Kontaktebene der Holzbauteile 11, 12 bzw. deren Normale 47 angeordnet. Ferner sind die beiden zweiten Verbindungsmittel 20, 40 derart angeordnet, daß ihre Längsachsen 26, 46 in einer gemeinsamen planen Ebene liegen.

Im übrigen sind die Stoßverbindung 30 und deren Verbindungselemente gleich gestaltet wie die Stoßverbindung 10 gemäß dem ersten Ausführungsbeispiel.

### BEZUGSZEICHENLISTE

- 10: Stoßverbindung
- 11: Holzbauteil (Riegel)
- 12: Holzbauteil (Pfosten)
- 13: Kontaktfläche
- 14: Kontaktfläche
- 15: Aufnahmenut
- 16: Aufnahmenut
- 18: Verbindungselement
- 19: Längsachse von 18
- 20: Verbindungsmittel (Sicherungsschraube)
- 21: Schraubenkopf
- 22: Schaftspitze
- 23: Gewindeabschnitt
- 24: Schaftabschnitt

- 26: Längsachse von 20
- 30: Stoßverbindung
- 40: Verbindungsmittel
- 41: Winkel
- 46: Längsachse von 40
- 47: Normale

## Patentansprüche

1. Stoßverbindung von in Kontaktflächen aneinandergefügten Holzbauteilen, etwa Rahmenteilen, insbesondere Pfosten-Riegelverbindung, mit wenigstens einem in Bezug auf eine Mittelebene symmetrisch etwa in der Art eines schwalbenschwanzförmigen Doppelkeils ausgebildeten oder sonstige Hinterschneidungen aufweisenden Verbindungselement, das unter Überbrückung der Kontaktebene zwischen den Holzbauteilen in zu den Kontaktflächen offene und den Querschnitten der sich beidseitig der genannten Mittelebene erstreckenden Abschnitte des Verbindungselements angepaßte Nuten eingreift, die nach den gleichen Seitenkanten der Holzbauteile offen sind,
**dadurch gekennzeichnet, daß**
die Stoßverbindung (10) durch wenigstens ein langgestrecktes zweites Verbindungsmittel (20) gesichert ist, welches Verbindungsmittel (20) ebenfalls unter Überbrückung der Kontaktebene zwischen den Holzbauteilen (11, 12) in Abschnitten von diesen aufgenommen ist und gleichzeitig das erste Verbindungselement (18) quer durchdringt.

2. Stoßverbindung nach Anspruch 1, **dadurch gekennzeichnet, daß** sich das zweite Verbindungsmittel (20) schräg zur Kontaktebene zwischen den aneinandergefügten Holzbauteilen (11, 12) verlaufend über die Kontaktebene hinwegerstreckt und das erste Verbindungselement (18) quer durchdringt.

3. Stoßverbindung nach Anspruch 2, **dadurch gekennzeichnet, daß** das zweite Verbindungsmittel (20) unter Einschluß eines spitzen Winkels von vorzugsweise 45 Grad gegenüber der Kontaktebene sich in die Holzbauteile hinein und durch das erste Verbindungselement (18) hindurcherstreckt.

4. Stoßverbindung nach Anspruch 2 oder 3, **dadurch gekennzeichnet, daß** als zweites Verbindungsmittel ein in Schrägbohrungen, die sich in an die Kontaktebene angrenzenden Abschnitten der Rahmenteile und durch das erste Verbindungselement (18) hindurcherstrecken, aufgenommener Zapfen dient.

5. Stoßverbindung nach Anspruch 4, **dadurch gekennzeichnet, daß** der das zweite Verbindungsmittel bildende Zapfen mit Preßsitz in zumindest einer der sich in den Rahmenteilen erstreckenden Schrägbohrungen aufgenommen ist.

6. Stoßverbindung nach Anspruch 2 oder 3, **dadurch gekennzeichnet, daß** als zweites Verbindungsmittel ein eingeschlagener Schrägnagel dient.

7. Stoßverbindung nach Anspruch 6, **dadurch gekennzeichnet, daß** es sich bei dem Schrägnagel um einen Schraubnagel handelt.

8. Stoßverbindung nach Anspruch 2 oder 3, **dadurch gekennzeichnet, daß** als zweites Verbindungsmittel eine schräg zur Kontaktebene zwischen den aneinandergefügten Holzbauteilen (11, 12) in diese unter Durchdringung des ersten Verbindungselements (18) eingedrehte Sicherungsschraube (20) dient.

9. Stoßverbindung nach Anspruch 8, **dadurch gekennzeichnet, daß** die Sicherungsschraube (20) einen mit selbstschneidendem Gewinde ausgestatteten Gewindeabschnitt (23) aufweist.

10. Stoßverbindung nach Anspruch 9, **dadurch gekennzeichnet, daß** die Sicherungsschraube (20) einen sich an deren Gewindeabschnitt (23) anschließenden gewindefreien Schaftabschnitt (24) aufweist.

11. Stoßverbindung nach einem der Ansprüche 1 bis 10, **dadurch gekennzeichnet, daß** wenigstens zwei langgestreckte zweite Verbindungsmittel (20, 40) vorgesehen sind, die in einem Winkel (41) von vorzugsweise etwa 90° zueinander angeordnet sind.

12. Stoßverbindung nach Anspruch 11, **dadurch gekennzeichnet, daß** wenigstens zwei der langgestreckten zweiten Verbindungsmittel (20, 40) derart angeordnet sind, daß ihre Längsachsen (26, 46) im wesentlichen in einer gemeinsamen Ebene liegen.

13. Stoßverbindung nach einem der Ansprüche 11 oder 12, **dadurch gekennzeichnet, daß** wenigstens zwei der zweiten Verbindungsmittel (20, 40) symmetrisch, vorzugsweise zu einer Längsachse (19) des ersten Verbindungselements (18) angeordnet sind.

14. Stoßverbindung nach einem der Ansprüche 11 bis 13, **dadurch gekennzeichnet, daß** wenigstens zwei der zweiten Verbindungsmittel (20, 40) symmetrisch zu der Kontaktebene und/oder deren Normale (47) angeordnet sind.

## Claims

1. Butt joint of wood components, for example frame parts, joined together at contact surfaces, particularly a post and beam connection, with at least one connecting element, which is symmetrical with respect to a centre plane and is constructed in, for example, the form of a dovetail-shaped double wedge or has other undercuts and which with bridging over the contact plane between the wood components engages in grooves, which are open with respect to the contact surfaces and matched to the cross-sections of the portions of the connecting element extending on either side of the said centre plane and which are open towards the same side edges of the wood components, **characterised in that** the butt joint (10) is secured by at least one elongate second connecting means (20), which connecting means (20) similarly with bridging the contact plane between the wood components (11, 12) is received in portions of these and at the same time transversely penetrates the first connecting element (18).

2. Butt joint according to claim 1, **characterised in that** the second connecting means (20) passes over the contact plane between the joined-together wood components (11, 12) to extend obliquely to the contact plane and transversely penetrates the first connecting element (18).

3. Butt joint according to claim 2, **characterised in that** the second connecting means (20) extends in the wood components and through the first connecting element (18) with inclusion of an acute angle of preferably 45 degrees relative to the contact plane.

4. Butt joint according to claim 2 or 3, **characterised in that** a pin received in oblique bores which extend in portions of the frame parts adjoining the contact plane and through the first connecting element (18) serves as the second connecting means.

5. Butt joint according to claim 4, **characterised in that** the pin forming the second connecting means is received with a press fit in at least one of the oblique bores extending in the frame parts.

6. Butt joint according to claim 2 or 3, **characterised in that** a skew nail which has been driven in serves as second connecting means.

7. Butt joint according to claim 6, **characterised in that** the skew nail is a screw nail.

8. Butt joint according to claim 2 or 3, **characterised in that** a securing screw (20) screwed obliquely to the contact plane between the joined-together wood components (11, 12) and into these with penetration of the first connecting element (18) serves as the second connecting means.

9. Butt joint according to claim 8, **characterised in that** the securing screw (20) has a threaded portion (23) furnished with a self-tapping thread.

10. Butt joint according to claim 9, **characterised in that** the securing screw (20) has a thread-free shank portion (24) adjoining the threaded portion (23) thereof.

11. Butt joint according to one of claims 1 to 10, **characterised in that** at least two elongate second connecting means (20, 40), which are arranged at an angle (41) of preferably approximately 90° relative to one another, are provided.

12. Butt joint according to claim 11, **characterised in that** at least two of the elongate second connecting means (20, 40) are arranged in such a manner that the longitudinal axes (26, 46) thereof lie substantially in a common plane.

13. Butt joint according to one of claims 11 and 12, **characterised in that** at least two of the second connecting means (20, 40) are arranged symmetrically preferably with respect to a longitudinal axis (19) of the first connecting element (18).

14. Butt joint according to one of claims 11 to 13, **characterised in that** at least two of the second connecting means (20, 40) are arranged symmetrically with respect to the contact plane and/or the normal (47) thereof.

## Revendications

1. Raccordement bout à bout de parties de construction en bois assemblées dans des faces de contact, par exemple des parties de cadre, en particulier raccordement poteau - verrou, avec au moins un élément de liaison réalisé par rapport à un plan médian d'une manière symétrique à peu près à la manière d'un coin double en forme de queue d'aronde ou présentant d'autres contre-dépouilles qui, en passant sur le plan de contact entre les parties de construction en bois s'engagent dans des rainures ouvertes vers les faces de contact et adaptées aux sections transversales des tronçons de l'élément de liaison s'étendant des deux côtés du plan médian précité, qui sont ouvertes vers les mêmes arêtes latérales des parties de construction en bois,
- **caractérisé en ce que**
- le raccordement bout à bout (10) est assuré par au moins un deuxième élément de liaison oblong (20), ledit élément de liaison (20), également en passant sur le plan de contact entre les parties de construction en bois (11,12), est reçu dans des tronçons de celles-ci et traverse en même temps le premier élément de liaison (18) transversalement.

2. Raccordement bout à bout selon la revendication 1, **caractérisé en ce que** le deuxième moyen de liaison (20) s'étend en biais au plan de contact entre les parties de construction en bois assemblées (11,12) au-delà du plan de contact, et traverse le premier élément de liaison (18) transversalement.

3. Raccordement bout à bout selon la revendication 2, **caractérisé en ce que** le deuxième moyen de liaison (20), en formant un angle aigu de préférence de 45 degrés s'étend sur le plan de contact dans les parties de construction en bois et à travers le premier élément de liaison (18).

4. Raccordement bout à bout selon la revendication 2 ou 3, **caractérisé en ce que**, comme deuxième moyen de liaison, il est prévu une cheville reçue dans des alésages inclinés qui s'étendent dans des tronçons des parties de quatre avoisinant le plan de contact et à travers le premier élément de liaison (18).

5. Raccordement bout à bout selon la revendication 4, **caractérisé en ce que** la cheville formant le deuxième moyen de liaison est reçue avec un ajustement serré dans au moins l'un des alésages inclinés s'étendant dans les parties de cadre.

6. Raccordement bout à bout selon la revendication 2 ou 3, **caractérisé en ce qu'**est prévu comme deuxième moyen de liaison un clou oblique enfoncé.

7. Raccordement bout à bout selon la revendication 6, **caractérisé en ce que** dans le cas du clou oblique, il s'agit d'un clou à visser.

8. Raccordement bout à bout selon la revendication 2 ou 3, **caractérisé en ce qu'**il est prévu comme deuxième moyen de liaison une vis de retenue (20) vissée en biais au plan de contact entre les parties de construction en bois assemblées (11,12) dans celles-ci en passant à travers le premier élément de liaison (18).

9. Raccordement bout à bout selon la revendication 8, **caractérisé en ce que** la vis de retenue (20) présente un tronçon de filetage (23) pourvu d'un filetage auto-taraudeur.

10. Raccordement bout à bout selon la revendication 9, **caractérisé en ce que** la vis de retenue (20) présente un tronçon de tige (24) sans filetage, faisant suite à son tronçon fileté (23).

11. Raccordement bout à bout selon l'une des revendications 1 à 10, **caractérisé en ce qu'**au moins deux seconds moyens de liaison oblongs (20, 40) sont prévus qui sont disposés selon un angle (41), de préférence d'environ 90° l'un relativement à l'autre.

12. Raccordement bout à bout selon la revendication 11, **caractérisé en ce qu'**au moins deux des seconds moyens de liaison oblongs (20, 40) sont disposés de telle sorte que leurs axes longitudinaux (26,46) se situent sensiblement dans un plan commun.

13. Raccordement bout à bout selon l'une des revendications 11 ou 12, **caractérisé en ce qu'**au moins deux des seconds moyens de liaison (20,40) sont disposés d'une manière symétrique, de préférence à un axe longitudinal (19) du premier élément de liaison (18).

14. Raccordement bout à bout selon l'une des revendications 11 à 13, **caractérisé en ce qu'**au moins deux des seconds moyens de liaison (20,40) sont disposés d'une manière symétrique au plan de contact et/ou à la normale (47) de celui-ci.
